# EUROPÄISCHE PATENTSCHRIFT

(11) **EP 0 545 175 B1**
(45) Veröffentlichungstag und Bekanntmachung des Hinweises auf die Patenterteilung: **31.07.1996**
(21) Anmeldenummer: 92119790.1
(22) Anmeldetag: 20.11.1992
(51) Int. Cl.: C08G 18/10, C08G 18/66, C08K 3/04, C08K 3/36, C08G 18/08, C08J 9/00

(54) **Verfahren zur Herstellung von Fluorchlorkohlenwasserstoff freien, Urethangruppen enthaltenden Formkörpern mit einem zelligen Kern und einer verdichteten Randzone**
Process for the preparation of molded parts containing urethane groups, devoid of fluorchlorohydrocarbons, having a cellular core and a compact outer layer
Procédé pour la préparation de pièces moulées contenant des groupes d'uréthane, dépourvus de fluorochlorohydrocarbures et ayant un noyau cellulaire et une couche externe compacte

(30) Priorität: 30.11.1991 DE 4139520
(43) Veröffentlichungstag der Anmeldung: 09.06.1993
(73) Patentinhaber: BASF Aktiengesellschaft, 67063 Ludwigshafen (DE)
(72) Erfinder: Horn, Peter, Dr., W-6900 Heidelberg (DE); Mueller, Ulrich, Dr., W-6730 Neustadt (DE); Hoelderich, Wolfgang, Prof. Dr., W-6710 Frankenthal (DE); Taddey, Rudolf, W-2845 Damme (DE); Tintelnot, Dieter, W-2840 Diepholz (DE); Schuster, Ludwig, Dr., W-6703 Limburgerhof (DE)

(56) Entgegenhaltungen:
- EP-A- 0 319 866
- DE-A- 3 528 597
- US-A- 3 775 350
- CHEMICAL ABSTRACTS, vol. 83, no. 24, Dezember 1975, Columbus, Ohio, US; abstract no. 194407v, YASUI ET AL 'POLYURETHANE FOAMS CONTAINING ASBESTOS AND ACTIVE CARBON' Seite 52 ;Spalte 1 ; & JP-A-50 101 497

## Beschreibung

Gegenstand der Erfindung ist ein verfahren zur Herstellung von Fluorchlorkohlenwasserstoff freien, Urethangruppen oder Urethan- und Harnstoffgruppen enthaltenden, weichelastischen, halbharten oder harten Formkörpern mit einem zelligen Kern und einer verdichteten Randzone sowie einer im wesentlichen porenfreien, glatten Oberfläche, sogenannten Polyurethan(PU)-Integralschaumstoffen, durch Umsetzung der an sich bekannten Aufbaukomponenten zur Bildung von Polyisocyanat-polyadditionsprodukte in Gegenwart von Wasser und/oder inerten physikalisch wirkenden Treibmitteln mit Ausnahme von Fluorchlorkohlenwasserstoffen, Katalysatoren, mikroporöser Aktivkohle und/oder mikroporösen Kohlenstoffmolekularsieben sowie gegebenenfalls zusätzlichen anderen Zusatzstoffen und Hilfsmitteln.

Die Herstellung von Formkörpern mit einem zelligen Kern und einer verdichteten Randzone durch Umsetzung von organischen Polyisocyanaten, höhermolekularen Verbindungen mit mindestens zwei reaktiven Wasserstoffatomen und gegebenenfalls Kettenverlängerungs- und/oder Vernetzungsmitteln in Gegenwart von Treibmitteln, vorzugsweise physikalisch wirkenden Treibmitteln, Katalysatoren, Hilfs- und/oder Zusatzstoffen in einem geschlossenen, gegebenenfalls temperierten Formwerkzeug ist seit langem bekannt und wird beispielsweise beschrieben in der DE-A-16 94 138 (GB 1 209 243), DE-C-19 55 891 (GB 1 321 679) und DE-B-17 69 886 (US 3 824 199).

Eine zusammenfassende Übersicht über derartige Formkörper, sogenannte Polyurethan-Integralschaumstoffe, wurde beispielsweise veröffentlicht in Kunststoff-Handbuch, Band 7, Polyurethane, herausgegeben von Dr. G. Oertel, Carl-Hanser-Verlag, München, Wien, 2. Auflage, 1983, Seiten 333ff. und in Integralschaumstoffe von Dr. H. Piechota und Dr. H. Röhr, Carl-Hanser-Verlag, München, Wien, 1975.

Obgleich die Herstellung von weichelastischen, halbharten oder harten PU-Integralschaumstoff-Formkörpern eine außerordentliche technische Bedeutung erlangt hat, weisen die beschriebenen Verfahren aufgrund des gesteigerten Umweltbewußtseins hinsichtlich der verwendeten Treibmittel Mängel auf. Als Treibmittel werden weltweit in großem Maßstabe Fluorchloralkane, vorzugsweise Trichlorfluormethan, eingesetzt, die unter dem Einfluß der exothermen Polyadditionsreaktion zunächst verdampfen, danach bei erhöhtem Druck an der kühleren Innenwand des Formwerkzeugs partiell kondensiert und in den Formkörper eingelagert werden. Nachteilig an diesen Treibgasen ist lediglich die Belastung der Umwelt, da sie in Verdacht stehen, in der Stratosphäre am Abbau der Ozonschicht beteiligt zu sein.

Zur Reduzierung der Fluorchloralkane wird als Treibmittel vorwiegend Wasser eingesetzt, das mit dem Polyisocyanat unter Kohlendioxidentwicklung reagiert, welches als eigentliches Treibgas wirkt. Nachteilig an diesem Verfahren ist, daß das gebildete Kohlendioxid unter den im Formwerkzeug vorliegenden Reaktionsbedingungen an der Werkzeuginnenfläche nicht kondensiert wird und so zur Bildung von Formkörpern mit einer porenhaltigen Oberfläche führt.

Nach Angaben der DE-A-1 804 362 (GB 1 285 224) können PU-Schaumstoffe mit einer kompakten Oberfläche und einem zelligen Kern unter Mitverwendung von Alkali-Aluminium-Silikaten mit Zeolithstruktur hergestellt werden. Als Treibmittel finden insbesondere Halogenkohlenwasserstoffe oder Mischungen aus Halogenkohlenwasserstoffen und partiell hydratisierten Alkali-Aluminium-Silikaten oder organische Hydratwasser haltige Verbindungen Verwendung. Durch den Zusatz von Wasser und der Alkali-Aluminium-Silikate sollten trotz der Mitverwendung von Fluorchlorkohlenwasserstoffen schrumpffreie PU-Integralschaumstoff-Formkörper mit Gesamtdichten bis 120 g/Liter hergestellt werden.

Fluorchlorkohlenwasserstoff freie, harte PU-Schaumstoff-Formteile mit einer hohen Oberflächenhärte und einer bei mindestens 300 kg/m³ liegenden Rohdichte werden in der EP-A-0 319 866 (US 4 882 363) beschrieben. Zu ihrer Herstellung finden Polyhydroxylverbindungen oder ein Gemisch organischer Polyhydroxylverbindungen mit einer mittleren Hydroxylfunktionalität von mindestens 2,2 und einer mittleren Hydroxylzahl von mindestens 300 mg KOH/g, als Treibmittel Wasser und/oder Kohlendioxid und als Zusatzmittel zeolithische Absorbentien mit einem Durchmesser der Porenöffnung zu den Absorptionshohlräumen von mindestens 0,7 nm Verwendung.

Zeolithmodifizierte, wassergetriebene Polyurethanschaumstoffe, die sich durch eine verbesserte Flammwidrigkeit auszeichnen und keine halogen- oder/und phosphorhaltigen Flammschutzmittel enthalten, werden in der EP-A-0 388 952 beschrieben. Nach Angaben der US-A-4, 518,718 können geschlossenzellige, harte Polyurethanschaumstoffe mit einer höheren Wärmeformbeständigkeit hergestellt werden durch Umsetzung von Polyolen mit Polyisocyanaten, wobei jeder dieser Aufbaukomponenten ein Zeolith einverleibt wird, der Moleküle mit einem effektiven kritischen Durchmesser bis zu 0,1 nm absorbieren kann.

Ein Verfahren zur Herstellung von weichelastischen Polyurethan-Formkörpern mit einem zelligen Kern und einer kompakten Randzone nach der RIM-Technik wird in der DE-A-40 34 082 beschrieben. Als Zusatzmittel werden kristalline, mikroporöse Molekularsiebe und/oder kristallines Siliciumdioxid (Silicalite) verwendet. Obgleich nach diesem Verfahren Formkörpern mit guten mechanischen Eigenschaften und einer im wesentlichen porenfreien, glatten Oberfläche erhalten werden, weist das Verfahren auch Nachteile auf. Nachteilig ist z.B. die schwierige und technisch aufwendige Herstellung der mikroporösen, kristallinen Molekularsiebe und des Siliciumdioxids mit Zeolithstruktur und die beträchtliche Menge an diesen Zusatzstoffen, die der Polyurethanformulierung einverleibt werden muß, um Polyurethanformkörper mit der gewünschten kompakten Randzone und einer im wesentlichen porenfreien Oberfläche zu erzielen.

Nach Angaben der P 41 15 456.8 können zur Herstellung von weichelastischen, halbharten oder harten Polyurethan-Formkörpern mit einer integralen Dichteverteilung und einer im wesentlichen porenfreien, glatten Oberfläche als Zusatzstoff amorphe mikroporöse Kieselgele verwendet werden. Obgleich die hergestellten Formkörper ausgezeichnete mechanische Eigenschaften besitzen, bereitet ihre Herstellung in Großserien zur Zeit gewisse Schwierigkeiten hinsichtlich der Konstanz des Raumgewichts und der Katalyse.

Die Aufgabe der vorliegenden Erfindung bestand somit darin, Urethangruppen oder Urethan- und Harnstoffgruppen enthaltende Formkörper mit einem zelligen Kern und einer verdichteten Randzone mit einer im wesentlichen porenfreien, glatten Oberfläche ohne die Mitverwendung von Fluorchlorkohlenwasserstoffen nach einem einfachen, kostengünstigen Verfahren herzustellen. Geeignete Polyurethanformulierungen sollten lagerstabil, leicht handhabbar, gut fließfähig und auch in Abwesenheit von Fluorchlorkohlenwasserstoffen, das als Verdünnungsmittel wirkt, nach der RIM- oder Niederdrucktechnik gut verarbeitbar sein.

Diese Aufgabe konnte überraschenderweise gelöst werden durch die Mitverwendung von vorzugsweise Wasser enthaltenden, mikroporösen Aktivkohlen und/oder mikroporösen Kohlenstoffmolekularsieben als Zusatzstoff zur Herstellung der PU-Formkörper.

Gegenstand der Erfindung ist somit ein Verfahren zur Herstellung von Fluorchlorkohlenwasserstoff freien, Urethangruppen oder Urethan- und Harnstoffgruppen enthaltenden Formkörpern mit einem zelligen Kern und einer verdichteten Randzone durch Umsetzung von
a) organischen und/oder modifizierten organischen Polyisocyanaten mit
b) mindestens einer höhermolekularen Verbindung mit mindestens zwei reaktiven Wasserstoffatomen und gegebenenfalls
c) niedermolekularen Kettenverlängerungs- und/oder Vernetzungsmitteln in Gegenwart von
d) Treibmitteln,
e) Katalysatoren,
f) Zusatzstoffen und gegebenenfalls
g) Hilfsmitteln
in einem geschlossenen Formwerkzeug unter Verdichtung, das dadurch gekennzeichnet ist, daß man als Zusatzstoff (f) mikroporöse Aktivkohle oder mikroporöse Kohlenstoffmolekularsiebe oder Mischungen aus derartigen Aktivkohlen und Kohlenstoffmolekularsieben verwendet, wobei die mikroporösen Aktivkohlen, oder mikroporösen kohlenstoffmolekularsiebe mittlere Porendurchmesser haben, die zu mehr als 10% im Bereich von 0,3 bis 3 nm liegen.

Trotz Zusatz der mikroporösen, vorzugsweise wasserhaltigen Aktivkohle und/oder vorzugsweise mikroporösen, vorzugsweise wasserhaltigen Kohlenstoffmolekularsiebe und der damit verbundenen Viskositätserhöhung der Systemkomponenten, sind diese sehr gut fließfähig und nach der RIM- oder Niederdruck-Technik problemlos verarbeitbar. Die hergestellten halbharten, harten oder vorzugsweise weichelastischen PU-Formteile besitzen eine Randzone höherer Dichte und eine glatte im wesentlichen porenfreie und blasenfreie Oberfläche. Die Shore-A-Härte der Oberfläche entspricht ebenso wie die übrigen mechanischen Eigenschaften der mit Fluorchlorkohlenwasserstoff aufgeschäumter Integralschaumstoff-Formkörper. Vorteilhaft ist ferner, daß die erfindungsgemäß verwendbaren, Aktivkohle und/oder Kohlenstoffmolekularsiebe enthaltenden Systemkomponenten auch nach längerer Lagerzeit keine erkennbare Änderung ihrer physikalischen und chemischen Eigenschaften aufweisen, so daß PU-Formkörper, insbesondere mit gleichen Raumgewichten, unter gleichen Reaktionsbedingungen reproduzierbar hergestellt werden können.

Zu den für das erfindungsgemäße Verfahren verwendbaren Aufbaukomponenten (a), (b) und (d) bis (f) sowie gegebenenfalls (c) und (g) und den erfindungsgemäß geeigneten mikroporösen Aktivkohlen und Kohlenstoffmolekularsieben ist folgendes auszuführen:

a) Als organische Polyisocyanate (a) kommen aliphatische, cycloaliphatische, araliphatische und vorzugsweise aromatische mehrwertige Isocyanate in Frage.

Im einzelnen seien beispielhaft genannt: Alkylendiisocyanate mit 4 bis 12 Kohlenstoffatomen im Alkylenrest, wie 1,12-Dodecan-diisocyanat, 2-Ethyl-tetramethylen-diisocyanat-1,4, 2-Methyl-pentamethylen-diisocyanat-1,5, Tetramethylen-diisocyanat-1,4 und vorzugsweise Hexamethylen-diisocyanat-1,6; cycloaliphatische Diisocyanate, wie Cyclohexan-1,3-und -1,4-diisocyanat sowie beliebige Gemische dieser Isomeren, 1-Isocyanato-3,3,5-trimethyl-5-isocyanatomethyl-cyclohexan (Isophoron-diisocyanat), 2,4- und 2,6-Hexahydrotoluylen-diisocyanat sowie die entsprechenden Isomerengemische, 4,4'-, 2,2'- und 2,4' -Dicyclohexylmethan-diisocyanat sowie die entsprechenden Isomerengemische, araliphatische Diisocyanate, wie z.B. 1,4-Xylylen-diisocyanat und Xylylen-diisocyanat-Isomerenmischungen und vorzugsweise aromatischen Di- und Polyisocyanate, wie z.B. 2,4- und 2,6-Toluylen-diisocyanat und die entsprechenden Isomerengemische, 4,4'-, 2,4'- und 2,2'-Diphenylmethan-diisocyanat und die entsprechenden Isomerengemische, Mischungen aus 4,4'- und 2,4'-Diphenylmethan-diisocyanaten, Polyphenyl-polymethylen-polyisocyanate, Mischungen aus 4,4'-, 2,4'- und 2,2'-Diphenylmethan-diisocyanaten und Polyphenyl-polymethylen-polyisocyanaten (Roh-MDI) und Mischungen aus Roh-MDI und Toluylen-diisocyanaten. Die organischen Di- und Polyisocyanate können einzeln oder in Form von Mischungen eingesetzt werden.

Häufig werden auch sogenannte modifizierte mehrwertige Isocyanate, d.h. Produkte, die durch chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat-, Uretdion-, Uretonimin- und/oder Urethangruppen enthaltende Di- und/oder Polyisocyanate. Im einzelnen kommen beispielsweise in Betracht: Urethangruppen enthaltende organische, vorzugsweise aromatische Polyisocyanate mit NCO-Gehalten von 33,6 bis 15 Gew.%, vorzugsweise von 31 bis 21 Gew.%, bezogen auf das Gesamtgewicht, beispielsweise mit niedermolekularen Diolen, Triolen, Dialkylenglykolen, Trialkylenglykolen oder Polyoxyalkylenglykolen mit Molekulargewichten bis 4200 modifiziertes 4,4'-Diphenylmethan-diisocyanat, Mischungen aus 4,4'- und 2,4'-Diphenylmethan-diisocyanaten oder 2,4- bzw. 2,6-Toluylen-diisocyanat, wobei als Di- bzw. Polyoxyalkylen-glykole, die einzeln oder als Gemische eingesetzt werden können, beispielsweise genannt seien: Diethylen-, Dipropylen-, Polyoxyethylen-, Polyoxypropylen- und Polyoxypropylenpolyoxyethylen-glykole. Geeignet sind auch NCO-Gruppen enthaltende Prepolymere mit NCO-Gehalten von 25 bis 3,5 Gew.%, vorzugsweisevon 21 bis 14 Gew.%, bezogen auf das Gesamtgewicht, hergestellt aus den nachfolgend beschriebenen Polyester- und/oder vorzugsweise Polyether-polyolen und 4,4'-Diphenylmethan-diisocyanat, Mischungen aus 2,4'- und 4,4'-Diphenylmethan-diisocyanat, 2,4- und/oder 2,6-Toluylen-diisocyanaten oder Roh-MDI. Bewährt haben sich ferner flüssige Carbodiimidgruppen und/oder Isocyanuratringe enthaltende Polyisocyanate mit NCO-Gehalten von 33,6 bis 15 Gew.%, vorzugsweise 31 bis 21 Gew.%, bezogen auf das Gesamtgewicht, z.B. auf Basis von 4,4'-, 2,4'- und/oder 2,2'-Diphenylmethan-diisocyanat und/oder 2,4- und/oder 2,6-Toluylen-diisocyanat.

Die modifizierten Polyisocyanate können miteinander oder mit unmodifizierten organischen Polyisocyanaten, wie z.B. 2,4'-, 4,4'-Diphenylmethan-diisocyanat, Roh-MDI, 2,4- und/oder 2,6-Toluylen-diisocyanat gegebenenfalls gemischt werden. Sehr gut geeignet sind z.B. Mischungen aus mit Urethangruppen modifizierten Diphenylmethan-diisocyanaten und/oder Toluylen-diisocyanaten und/oder Roh-MDI und gegebenenfalls unmodifizierten Diphenylmethan-diisocyanaten und/oder Toluylen-diisocyanaten und/oder Roh-MDI.

Besonders bewährt haben sich als organische Polyisocyanate und kommen daher vorzugsweise zur Herstellung der weichelastischen oder halbharten Polyurethan-Formkörper zur Anwendung: NCO-Gruppen enthaltende Prepolymere mit einem NCO-Gehalt von 25 bis 9 Gew.%, insbesondere auf Basis von Polyether- oder Polyester-polyolen und einem oder mehreren Diphenylmethan-diisocyanat-Isomeren, vorteilhafterweise 4,4'-Diphenylmethan-diisocyanat und/oder modifizierte Urethangruppen enthaltende organische Polyisocyanate mit einem NCO-Gehalt von 33,6 bis 15 Gew.%, insbesondere auf Basis von 4,4' -Diphenylmethan-diisocyanat oder Diphenylmethan-diisocyanat-Isomerengemischen, Mischungen aus 2,4- und 2,6-Toluylen-diisocyanaten, Mischungen aus Toluylen-diisocyanaten und Roh-MDI oder insbesondere Mischungen aus den vorgenannten Prepolymeren auf Basis von Diphenylmethan-diisocyanat-Isomeren und Roh-MDI. Die aromatischen Polyisocyanate, modifizierten aromatischen Polyisocyanate oder Polyisocyanatmischungen besitzen zweckmäßigerweise eine durchschnittliche Funktionalität von 2 bis 2,6, vorzugsweise 2 bis 2,4 und insbesondere 2 bis 2,2. Zur Herstellung der harten Polyurethan-Integralschaumstoff-Formkörper finden vorzugsweise mit Urethangruppen modifizierte aromatische Polyisocyanate einer Funktionalität von größer als 2,6, zweckmäßigerweise von 2,8 bis 3,5 und insbesondere Roh-MDI Verwendung.

Sofern für spezielle Anwendungsgebiete Formkörper mit lichtbeständiger Oberfläche, wie z.B. für Automobilinnenauskleidungen oder Nackenstützen, gefordert werden, werden zu deren Herstellung bevorzugt aliphatische oder cycloaliphatische Polyisocyanate, insbesondere modifizierte Polyisocyanate auf der Grundlage von Hexamethylen-diisocyanat-1,6 oder Isophoron-diisocyanat oder Gemische der genannten Diisocyanate gegebenenfalls mit Diphenylmethan-diisocyanat- und/oder Toluylen-diisocyanat-Isomeren verwendet.

b) Als höhermolekulare Verbindungen b) mit mindestens zwei reaktiven Wasserstoffatomen werden zweckmäßigerweise solche mit einer Funktionalität von 2 bis 8 und einem Molekulargewicht von 500 bis 8500 verwendet, wobei zur Herstellung von weichelastischen und halbharten Polyurethan-Formkörpern die höhermolekularen Verbindungen (b) eine Funktionalität von vorzugsweise 2 bis 3 und insbesondere 2,0 bis 2,6 und ein Molekulargewicht von vorzugsweise 1800 bis 6000 und insbesondere 2000 bis 5000 besitzen und zur Herstellung von harten Polyurethan-Formkörpern solche mit einer Funktionalität von vorzugsweise 3 bis 8 und insbesondere 3 bis 6 und einem Molekulargewicht von vorzugsweise 500 bis 3200, insbesondere 600 bis 2400 Anwendung finden. Besonders bewährt haben sich Polyole, ausgewählt aus der Gruppe der Polyether-polyole, Polyester-polyole, Polythioether-polyole, hydroxylgruppenhaltigen Polyesteramide, hydroxylgruppenhaltigen Polyacetale, hydroxylgruppenhaltigen aliphatischen Polycarbonate und polymermodifizierten Polyether-polyole oder Mischungen aus mindestens zwei der genannten Polyole. Insbesondere Anwendung finden Polyester-polyole und/oder Polyether-polyole.

Geeignete Polyester-polyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäure-mono-und/oder -diester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei- und mehrwertige Alkohole, insbesondere Diole und Alkylenglykole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin, Trimethylolpropan und Pentaerythrit. Vorzugsweise verwendet werden Ethandiol, Diethylenglykol, 1,4-Butandiol, 1,5-Pentandiol, 1,6-Hexandiol, Glycerin oder Mischungen aus mindestens zwei der genannten Diole, insbesondere Mischungen aus 1,4-Butandiol, 1,5-Pentandiol und 1,6-Hexandiol und/oder Glycerin. Eingesetzt werden können ferner Polyester-polyole aus Lactonen, z.B. ε-Caprolacton oder Hydroxycarbonsäuren, z.B. ω-Hydroxycapronsäure.

Zur Herstellung der Polyester-polyole können die organischen, z.B. aromatischen und vorzugsweise aliphatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgasen, wie z.B. Stickstoff, Kohlenmonoxid, Helium, Argon u.a. in der Schmelze bei Temperaturen von 150 bis 250°C, vorzugsweise 180 bis 220°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.

Zur Herstellung der Polyester-polyole werden die organischen Polycarbonsäuren und/oder -derivate und mehrwertigen Alkohole vorteilhafterweise im Molverhältnis von 1:1 bis 1,8, vorzugsweise 1:1,05 bis 1,2 polykondensiert.

Die erhaltenen Polyester-polyole besitzen vorzugsweise eine Funktionalität von 2 bis 3, insbesondere 2 bis 2,6 und ein Molekulargewicht von 1200 bis 3600, vorzugsweise 1500 bis 3000 und insbesondere 1800 bis 2500.

Insbesondere als Polyole verwendet werden jedoch Polyether-polyole, die nach bekannten Verfahren, beispielsweise durch anionische Polymerisation mit Alkalihydroxiden, wie Natrium- oder Kaliumhydroxid, oder Alkalialkoholaten, wie Natriummethylat, Natrium- oder Kaliumethylat oder Kaliumisopropylat, als Katalysatoren und unter Zusatz mindestens eines Startermoleküls, das 2 bis 8, vorzugsweise 2 oder 3 reaktive Wasserstoffatome für Polyether-polyole zur Herstellung von halbharten und weichelastischen PU-Formkörpern und vorzugsweise 3 bis 8, insbesondere 3 bis 6 reaktive Wasserstoffatome für Polyether-polyole zur Herstellung von harten PU-Formkörpern gebunden enthält, oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest hergestellt werden.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 4,4'-, 2,4'- und 2,2'-Diaminodiphenylmethan.

Als Startermoleküle kommen ferner in Betracht: Alkanolamine, wie z.B. Ethanolamin, N-Alkyl-alkanolamine, beispielsweise N-Methyl- und N-Ethyl-ethanolamin, Dialkanolamine, wie z.B. Diethanolamin, N-Alkyldialkanolamine, beispielsweise N-Methyl- und N-Ethyl-diethanolamin und Trialkanolamine, wie z.B. Triethanolamin und Ammoniak. Vorzugsweise verwendet werden mehrwertige, insbesondere zwei- und/oder dreiwertige Alkohole und/oder Dialkylenglykole, wie Ethandiol, Propandiol-1,2 und -1,3, Diethylenglykol, Dipropylenglykol, Butandiol-1,4, Hexandiol-1,6, Glycerin, Trimethylol-propan, Pentaerythrit, Sorbit und Sucrose oder Mischungen aus mindestens zwei mehrwertigen Alkoholen und gegebenenfalls zusätzlich Wasser.

Die Polyether-polyole, vorzugsweise Polyoxypropylen- und Polyoxypropylen-polyoxyethylen-polyole, besitzen, wie bereits ausgeführt wurde, vorteilhafterweise eine Funktionalität von 2 bis 8, Molekulargewichte von 500 bis 8500, und geeignete Polyoxytetramethylen-glykole ein Molekulargewicht bis ungefähr 3500, vorzugsweise von 600 bis 2200 und zweckmäßigerweise einen Gehalt an Alkaliionen von kleiner als 10 ppm.

Als Polyether-polyole eignen sich ferner polymermodifizierte Polyether-polyole, vorzugsweise Pfropf-polyether-polyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90 : 10 bis 10 : 90, vorzugsweise 70 : 30 bis 30 : 70, in zweckmäßigerweise den vorgenannten Polyether-polyolen analog den Angaben der deutschen Patentschriften 11 11 394, 12 22 669 (US 3 304 273, 3 383 351, 3 523 093), 11 52 536 (GB 10 40 452) und 11 52 537 (GB 987 618) hergestellt werden, sowie Polyether-polyoldispersionen, die als disperse Phase, üblicherweise in einer Menge von 1 bis 50 Gew.%, vorzugsweise 2 bis 25 Gew.%, enthalten: z.B. anorganische Füllstoffe, Polyharnstoffe, Polyhydrazide, tert.Aminogruppen gebunden enthaltende Polyurethane und/oder Melamin und die z.B. beschrieben werden in der EP-A-011 752 (CA 1 166 403), EP-B-011 752 (US 4 304 708), US-A-4 374 209 und DE-A-32 31 497.

Die Polyether-polyole können ebenso wie die Polyester-polyole einzeln oder in Form von Mischungen verwendet werden. Ferner können sie mit den polymermodifizierten Polyether-polyolen oder Polyester-polyolen sowie den hydroxylgruppenhaltigen Polyesteramiden, Polyacetalen und/oder Polycarbonaten gemischt werden.

Als hydroxylgruppenhaltige Polyacetale kommen z.B. die aus Glykolen, wie Diethylenglykol, Triethylenglykol, 4,4'-Dihydroxyethoxy-diphenyl-dimethylmethan, Hexandiol und Formaldehyd herstellbaren Verbindungen in Frage. Auch durch Polymerisation cyclischer Acetale lassen sich geeignete Polyacetale herstellen.

Als Hydroxylgruppen aufweisende Polycarbonate kommen solche der an sich bekannten Art in Betracht, die beispielsweise durch Umsetzung von Diolen, wie Propandiol-1,3, Butandiol-1,4 und/oder Hexandiol-1,6, Diethylenglykol, Trioxyethylenglykol oder Tetraoxyethylenglykol mit Diarylcarbonaten, z.B. Diphenylcarbonat, oder Phosgen hergestellt werden können.

Zu den hydroxylgruppenhaltigen Polyesteramiden zählen z.B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate.

c) Die Urethangruppen enthaltenden, harten, halbharten und vorzugsweise weichelastischen Formkörper mit verdichteter Randzone und zelligem Formkörperkern können ohne oder unter Mitverwendung von Kettenverlängerungs- und/oder Vernetzungsmitteln (c) hergestellt werden. Zur Modifizierung der mechanischen Eigenschaften, z.B. der Härte, kann sich jedoch der Zusatz von Kettenverlängerungsmitteln, Vernetzungsmitteln oder gegebenenfalls auch Gemischen davon als vorteilhaft erweisen. Als Kettenverlängerungs- und/oder Vernetzungsmittel verwendet werden z.B. niedermolekulare, mehrwertige Alkohole, vorzugsweise Diole und/oder Triole, mit Molekulargewichten kleiner als 480, vorzugsweise von 60 bis 300. In Betracht kommen beispielsweise aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Triethylenglykol, Dipropylenglykol, Tripropylenglykol und vorzugsweise Butandiol-1,3, Butandiol-1,4, Hexandiol-1,6, Bis-(2-hydroxyethyl)-bisphenol A und Bis-(2-hydroxyethyl)-hydrochinon, Triole, wie 1,2,4-, 1,3,5-Trihydroxy-cyclohexan, Trimethylolethan, Glycerin und Trimethylolpropan und hydroxylgruppenhaltige Polyalkylenoxide, z.B. mit Molekulargewichten bis 2500, vorzugsweise von 845 bis 136, auf Basis Ethylen- und/oder 1,2-Propylenoxid und den vorgenannten zur Polyether-polyolherstellung genannten Startermolekülen. Gut geeignet sind ferner propoxylierte Bisphenol A, z.B. solche mit Molekulargewichten von 1020 bis 340.

Als Kettenverlängerungsmittel eignen sich auch N,N'-dialkylsubstituierte, aromatische Diamine, die gegebenenfalls am aromatischen Rest durch Alkylgruppen substituiert sein können, mit 1 bis 20, vorzugsweise 1 bis 4 Kohlenstoffatomen im N-Alkylrest, wie z.B. N,N'-Di-ethyl-, N,N'-Di-sek.pentyl, N,N'-Di-sek.hexyl-, N,N'-Di-sek.decyl- und N,N'-Dicyclohexyl-, p- bzw. m-phenylendiamin, N,N'-Dimethyl-, N,N'-Di-ethyl-, N,N'-Diisopropyl-, N,N'-Di-sek.butyl- und N,N'-Dicyclohexyl-4,4'-diamino-diphenylmethan und N,N'-Di-sek.butylbenzidin.

Als Vernetzungsmittel (c) vorzüglich bewährt haben sich ferner Polyether-polyole mit einem relativ hohen Alkaliionengehalt, vorzugsweise solche mit einer mittleren Funktionalität von 3 bis 8, einer Hydroxylzahl von 200 bis 1240 und einem Gehalt an Alkaliionen, vorzugsweise Kaliumionen, von 150 bis 1200 ppm. Polyether-polyole mit einem derartigen Alkaliionengehalt können beispielsweise direkt hergestellt werden durch den Einsatz von Alkalihydroxiden oder -alkoholaten als Alkoxylierungskatalysatoren oder es können vorzugsweise handelsübliche Polyether-polyole, die üblicherweise einen Alkaliionengehalt von kleiner als 10 ppm besitzen mit wäßrigem Alkalihydroxid, vorzugsweise einer wäßrigen Kaliumhydroxidlösung, oder alkoholischen Alkalialkoholatlösungen, vorzugsweise alkoholischen Kaliumalkoholatlösungen, in den erforderlichen Mengen bei Raumtemperatur oder erhöhten Temperaturen, z.B. bei 20 bis 120°C behandelt werden. Danach wird das zugesetzte und gebildete Wasser bzw. der Alkohol bei einer Temperatur im Bereich von 70 bis 110°C, gegebenenfalls unter vermindertem Druck, z.B. von 0,01 bis 1 mbar, abdestilliert.

Als Vernetzungsmittel mit hohem Alkaliionengehalt vorzüglich bewährt haben sich Polyether-polyole wie z.B. mit Trimethylolpropan gestartete Polyoxyethylen-polyole mit einer Hydroxylzahl im Bereich von 632 bis 970 und einem Alkali-, vorzugsweise Kaliumionengehalt, im Bereich von 400 bis 600 ppm und mit Glycerin oder Trimethylolpropan oder einer Glycerin-Trimethylolpropanmischung gestartete Polyoxypropylen-polyole mit einer Hydroxylzahl im Bereich von 210 bis 930 und einem Alkali-, vorzugsweise Kaliumionengehalt, im Bereich von 400 bis 600 ppm. Als alkalireiche Polyether-polyole eignen sich ferner z.B. Polyoxypropylen-polyole mit einer mittleren Funktionalität von 4 bis 8, vorzugsweise 4 bis 6 und einer Hydroxylzahl von 230 bis 500, vorzugsweise von 250 bis 380, die erhalten werden unter Verwendung von Sucrose oder vorzugsweise Sorbit oder Mischungen aus Sucrose und Sorbit als Startermoleküle, wobei als Costarter zusätzlich Wasser, Propylenglykol, Glycerin oder Mischungen aus mindestens zwei der genannten Costarter mitverwendet werden können, mit der Maßgabe, daß die Polyether-polyole einen Alkaliionengehalt, vorzugsweise Kaliumionengehalt, von 200 bis 1000 ppm, vorzugsweise 400 bis 700 ppm besitzen. In Betracht kommen ferner Polyoxypropylen- und/oder Polyoxyethylen-polyole mit einem Alkaliionengehalt von 150 bis 800 ppm und einer Hydroxylzahl von 450 bis 750, die erhalten werden können durch Umsetzung von Pentaerythrit oder einer Mischung aus Pentaerythrit und Glycerin und/oder Trimethylolpropan, zweckmäßigerweise in einem Molverhältnis von Pentaerythrit zu Glycerin und/oder Trimethylolpropan von 1:1, mit 1,2-Propylenoxid oder Ethylenoxid.

Sofern die Verbindungen der Komponente (c) mitverwendet werden, können diese in Form von Mischungen oder einzeln eingesetzt werden und werden vorteilhafterweise in Mengen von 1 bis 50 Gew.-Teilen, vorzugsweise von 3 bis 40 Gew.-Teilen, bezogen auf 100 Gew.-Teile der höhermolekularen Verbindungen (b), angewandt.

d) Als Treibmittel (d) findet vorzugsweise Wasser Verwendung, das mit den organischen, gegebenenfalls modifizierten Polyisocyanaten (a) unter Bildung von Kohlendioxid und Harnstoffgruppen reagiert und dadurch die Druckfestigkeit der Endprodukte beeinflußt. Da die in den erfindungsgemäß verwendbaren mikroporösen Aktivkohlen und/oder mikroporösen Kohlenstoffmolekularsieben enthaltene Wassermenge, die je nach Porengröße und Porenvolumen bis zu 20 Gew.-%, vorzugsweise 3 bis 20 Gew.-%, bezogen auf das Gesamtgewicht, betragen kann, meist ausreicht, bedarf es vielfach keiner separaten Wasserzugabe. Sofern jedoch der Polyurethan-Formulierung zusätzlich Wasser einverleibt werden muß zur Erzielung des gewünschten Raumgewichts, wird dieses üblicherweise in Mengen von 0,05 bis 5 Gew.%, vorzugsweise von 0,1 bis 3 Gew.% und insbesondere von 0,1 bis 1 Gew.%, bezogen auf das Gewicht der Aufbaukomponente (a) bis (c) verwendet.

Als Treibmittel (d) können anstelle von Wasser oder vorzugsweise in Kombination mit Wasser und den erfindungsgemäß geeigneten mikroporösen Aktivkohlen und/oder mikroporösen Kohlenstoffmolekularsieben auch niedrigsiedende Flüssigkeiten, die unter dem Einfluß der exothermen Polyadditionsreaktion verdampfen und vorteilhafterweise einen Siedepunkt unter Normaldruck im Bereich von -40 bis 120°C, vorzugsweise von 10 bis 90°C besitzen, oder Gase eingesetzt werden.

Die als Treibmittel geeigneten Flüssigkeiten der oben genannten Art und Gase können z.B. ausgewählt werden aus der Gruppe der Alkane wie z.B. Propan, n- und iso-Butan, n- und iso-Pentan und vorzugsweise der technischen Pentangemische, Cycloalkane und Cycloalkene wie z.B. Cyclobutan, Cyclopenten, Cyclohexen und vorzugsweise Cyclopentan und/oder Cyclohexan, Dialkylether, wie z.B. Dimethylether, Methylethylether oder Diethylether, Cycloalkylenether, wie z.B. Furan, Ketone, wie z.B. Aceton, Methylethylketon, Carbonsäureester, wie Ethylacetat und Methylformiat, Carbonsäuren wie Ameisensäure, Essigsäure und Propionsäure, Fluoralkane, die in der Troposphäre abgebaut werden und deshalb für die Ozonschicht unschädlich sind, wie z.B. Trifluormethan, Difluormethan, Difluorethan, Tetrafluorethan und Heptafluorethan, wasserstoffhaltige Chlorfluoralkane, wie z.B. Dichlorfluormethan, Chlordifluormethan, 1-Chlor-2,2-difluorethan, 1-Chlor-1,1-difluorethan, 1-Chlor-1,2-difluorethan und/oder 1,1-Di-chlor-2,2,2-trifluorethan und Gase, wie z.B. Stickstoff, Kohlenmonoxid und Edelgase wie z.B. Helium, Neon und Krypton.

Die zweckmäßigste Menge an niedrigsiedender Flüssigkeit und Gasen, die jeweils einzeln als Flüssigkeits- oder Gasmischungen oder als Gasflüssigkeitsgemische eingesetzt werden können, hängt ab von der Dichte, die man erreichen will und der eingesetzten Menge an mikroporösen Aktivkohlen und/oder mikroporösen Kohlenstoffmolekularsieben oder Mischungen aus mikroporösen Aktivkohlen und/oder mikroporösen Kohlenstoffmolekularsieben und Wasser. Die erforderlichen Mengen können durch einfache Handversuche leicht ermittelt werden. Zufriedenstellende Ergebnisse liefern üblicherweise Flüssigkeitsmengen von 0,5 bis 20 Gew.-Teilen, vorzugsweise von 2 bis 10 Gew.-Teilen und Gasmengen von 0,01 bis 30 Gew.-Teilen, vorzugsweise von 2 bis 20 Gew.-Teilen, jeweils bezogen auf 100 Gew.-Teile der Komponente (b) und gegebenenfalls (c).

Als Treibmittel keine Anwendung finden, wie bereits ausgeführt wurde, Perfluorchlorkohlenwasserstoffe.

(e) Als Katalysatoren (e) zur Herstellung der Formkörper mit einer verdichteten Randzone und einem zelligen Kern werden insbesondere Verbindungen verwendet, die die Reaktion der Hydroxylgruppen enthaltenden Verbindungen der Komponente (b) und gegebenenfalls (c) mit den organischen, gegebenenfalls modifizierten Polyisocyanaten (a) stark beschleunigen. In Betracht kommen organische Metallverbindungen, vorzugsweise organische Zinnverbindungen, wie Zinn-(II)-salze von organischen Carbonsäuren, z.B. Zinn-(II)-diacetat, Zinn-(II)-dioctoat, Zinn-(II)-diethylhexoat und Zinn-(II)-dilaurat und die Dialkylzinn(IV)-salze von organischen Carbonsäuren, z.B. Dibutyl-zinndiacetat, Dibutylzinn-dilaurat, Dibutylzinn-maleat und Dioctylzinn-diacetat. Als gut geeignet haben sich auch Dialkylzinn(IV)-mercaptoverbindungen erwiesen, wie z.B. Bislaurylzinn(IV)-dimercaptid, und Verbindungen der allgemeinen Formeln R₂Sn(SR'-O-CO-R'')₂ oder R₂Sn(SR'-CO-OR'')₂, in denen R einen Alkylrest mit mindestens 8 Kohlenstoffatomen, R' einen Alkylenrest mit mindestens 2 Kohlenstoffatomen und R'' einen Alkylrest mit mindestens 4 Kohlenstoffatomen bedeuten. Als Katalysatoren dieser Art, die beispielsweise in der DD-A-218 668 beschrieben werden, seien beispielhaft genannt: Dioctylzinn-bis(thioethylenglykol-2-ethylhexoat), Dioctylzinn-bis(thioethylenglykollaurat), Dioctylzinn-bis(thiolatoessigsäure-2-ethylhexylester, Dioctylzinn-bis(thiolatoessigsäurehexylester) und Dioctylzinn-bis(thiolatoessigsäurelaurylester. Als Katalysatoren sehr gut bewährt haben sich ferner Organozinnverbindungen mit Zinn-Sauerstoff- oder Zinn-Schwefel-Bindungen, wie sie beispielsweise in der DD-A-255 535 beschrieben werden, der allgemeinen Formeln (R₃Sn)₂O, R₂SnS, (R₃Sn)₂S, R₂Sn(SR')₂ oder RSn(SR')₃, in denen R und R' Alkylgruppen darstellen, die 4 bis 8 Kohlenstoffatome bei R sowie 4 bis 12 Kohlenstoffatome bei R' enthalten und R^{I} außerdem die Reste -R^{II}COOR^{III} und -R^{II}OCOR^{III} bedeuten kann, in denen R^{II} Alkylgruppen mit 1 bis 6 Kohlenstoffatomen und R"' Alkylengruppen mit 4 bis 12 Kohlenstoffatomen sind. Als Beispiele hierfür seien genannt: Bis(tributylzinn)oxid, Dibutylzinnsulfid, Dioctylzinnsulfid, Bis(tributylzinn)sulfid, Dibutylzinn-bis(thioglykolsäure-2-ethylhexylester), Dioctylzinn-bis(thioglykolsäure-2-ethylhexylester), Octylzinn-tris(thioglykolsäure-2-ethyl-hexyl-ester), Dioctylzinnbis(thioethylenglykol-2-ethyl-hexoat) und Dibutylzinn-bis(thioethylenglykollaurat).

Die organischen Metallverbindungen können als Katalysatoren einzeln oder in Form von Katalysatorkombinationen eingesetzt werden. Als äußerst vorteilhaft hat sich eine Kombination erwiesen, die besteht aus 94 Gew.-% Di-n-octylzinn-bis-(2-ethylhexylthioglykolat) und 6 Gew.-% Mono-n-octyl-zinn-tris-(2-ethylhexylthioglykolat).

Als Katalysatoren (e) können auch stark basische Amine oder Kombinationen aus den organischen Metallverbindungen und stark basischen Aminen verwendet werden. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethyl-ethylendiamin, N,N,N'N'-Tetramethyl-butandiamin, N,N,N',N'-Tetramethyl-hexandiamin, N,N,N',N'-Tetramethyl-diamino-dicyclohexylmethan, Pentamethyldiethylentriamin, Permethylierte Polyoxyalkylen-polyamine, wie z.B. permethyliertes Jeffamin® D 230 oder D 400, partiell oder vollständig an der Aminogruppe alkylierte Polyoxyalkylen-polyamine, wobei mindestens einer der Alkylreste aus einem linearen oder verzweigten Alkylrest mit 1 bis 6 Kohlenstoffatomen oder einem Cycloalkylrest mit 5 oder 6 Kohlenstoffatomen besteht, oder zwei Alkylreste gemeinsam einen 5- oder 6-gliedrigen heterocyclischen Rest bilden, Tetramethyl-diaminoethylether, Bis-(dimethylaminopropyl)-harnstoff, Dimethylpiperazin, 1,2-Dimethylimidazol, 1-Aza-bicyclo-(3,3,0)-octan sowie am Kohlenstoff alkylierte und/oder arylierte 1,4-Diaza-bicyclo-(2,2,2)-octane, wobei z.B. die linearen oder verzweigten Alkylreste vorteilhafterweise 1 bis 6 Kohlenstoffatome und cyclische Alkylreste vorteilhafterweise 5 oder 6 Kohlenstoffatome besitzen und die Arylreste aus gegebenenfalls mit Alkylgruppen substituierten Phenylresten mit 6 bis 9 Kohlenstoffatomen bestehen, und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin.

Insbesondere bei Verwendung eines Polyisocyanatüberschusses kommen als Katalysatoren ferner in Betracht: Tris-(dialkylaminoalkyl)-s-hexahydrotriazine, insbesondere Tris-(N,N-dimethylaminopropyl)-s-hexahydrotriazin, Tetraalkylammoniumhydroxide, wie z.B. Tetramethylammoniumhydroxid, Alkalihydroxide, wie z.B. Natriumhydroxid und Alkalialkoholate, wie z.B. Natriummethylat und Kaliumisopropylat, Alkaliformiate und -acetate, wie z.B. Kaliumformiat und Kaliumacetat sowie Alkalisalze von langkettigen Fettsäuren mit 10 bis 20 C-Atomen und gegebenenfalls seitenständigen OH-Gruppen. Vorzugsweise verwendet werden 0,001 bis 5 Gew.-%, insbesondere 0,05 bis 2 Gew.-% Katalysator bzw. Katalysatorkombination bezogen auf das Gewicht der Komponente (b).

f) Wesentliches Merkmal der vorliegenden Erfindung ist die Verwendung von mikroporöser Aktivkohle, mikroporösen Kohlenstoffmolekularsieben oder Mischungen aus mikroporösen Aktivkohlen und mikroporösen Kohlenstoffmolekularsieben als Zusatzstoff (f), wobei diese Materialien zweckmäßigerweise zu mindestens 86 Gew.-%, vorzugsweise zu mehr als 95 Gew.-%, bezogen auf das Gesamtgewicht, aus Kohlenstoff bestehen.

Die erfindungsgemäßen verwendbaren mikroporösen Aktivkohlen oder mikroporösen Kohlenstoffmolekularsiebe besitzen einen mittleren Porendurchmesser von 0,3 bis 3 nm, vorzugsweise von 0,7 bis 2 nm und insbesondere von 1 bis 1,6 nm. Die Häufigkeit der mittleren Porendurchmesser in den angegebenen Bereichen beträgt mehr als 40 %, vorzugsweise mehr als 50 % und insbesondere mehr als 60 %.

Das Porenvolumen der erfindungsgemäß geeigneten mikroporösen Aktivkohlen oder mikroporösen Kohlenstoffmolekularsiebe liegt vorteilhafterweise im Bereich von 0,4 bis 1,4 ml/g, vorzugsweise von 0,3 bis 0,9 ml/g und insbesondere von 0,5 bis 0,8 ml/g. Die Porosität dieser mikroporösen Aktivkohlen oder mikroporösen Kohlenstoffmolekularsiebe und damit die Bestimmung des Porenvolumens kann erfaßt werden durch eine Titration, mit beispielsweise Wasser, nach einem Verfahren, wie es von A.Y. Mottlau und N.E. Fischer in Anal. Chem. Vol 34 (6), Seiten 714-715 (1962) beschrieben wird.

Bestimmt man das Porenvolumen der mikroporösen Aktivkohlen oder mikroporösen Kohlenstoffmolekularsiebe aus dem abszissenparallelen Verlauf einer mit Stickstoff bei 77 K daran gemessenen Gas-Sorptionsisotherme, so berechnen sich nach dem BJH-Modell (E.P. Barrett, L.G. Joyner, P.P. Halenda, J. Amer. Chem. Soc., Vol. 73, 373-380 (1951)) die mittleren Porendurchmesser.

Die erfindungsgemäß verwendbaren mikroporösen Aktivkohlen oder mikroporösen Kohlenstoffmolekularsiebe ergeben bei der Bestimmung der äquivalenten spezifischen Oberfläche nach der Berechnung mittels der BET Methode (s. Brunauer, P.H. Emmett, E. Teller in J. Amer. Chem. Soc. Vol. 60, Seiten 309 bis 319 (1938) Werte von vorteilhafterweise 500 bis 2500 m²/g und größer, vorzugsweise von 800 bis 1700 m²/g und insbesondere von 1000 bis 1500 m²/g.

Ein weiteres Charakteristikum der erfindungsgemäß verwendbaren mikroporösen Aktivkohlen oder mikroporösen Kohlenstoffmolekularsiebe kann der Verlauf der Adsorptionsisothermen sein. In den nach dem Stand der Technik ausgeführten Gasadsorptionsmessungen mit Stickstoff bei einer Temperatur von 77 K können die erfindungsgemäß verwendbaren Aktivkohlen oder Kohlenstoffmolekularsiebe eine Isotherme aufweisen, deren Verlauf als Typ I bekannt ist (K.S.W. Sing, D.M. Everett, R.A.W. Haul, L. Moscou, R.A. Pierotti, J. Rouquerol und T. Siemieniewska in Pure and Appl. Chem. Vol. 57 (4) Seiten 603 bis 619 (1985)).

Die erfindungsgemäß verwendbaren mikroporösen Aktivkohlen und mikroposören Kohlenstoffmolekularsiebe sind bekannt und im Handel erhältlich. Verfahren zu ihrer Herstellung und ihre Eigenschaften werden z.B. beschrieben in Ullmanns Encyklopädie der technischen Chemie, Band 14, 4. neubearbeitete und erweiterte Auflage, Verlag Chemie, Weinheim, New York, 1977, Seiten 620ff, Ullmanns Encyclopedia of Industrial Chemistry, Vol. 5A, Seiten 124ff, 5. Edition, Verlag Chemie (1986), Kirk-Othmer, Encyclopedia of Chemical Technology, Vol. 4, Seiten 561ff, 3. Edition, Verlag J. Wiley and Sons (1978), von G.C. Grunewald und R.S. Drago in J.Am.Chem.Soc. 1991, Vol. 113, Seiten 1636-1639, der EP-B-0 102 902 und EP-B-0 119 924.

Die erfindungsgemäß verwendbaren mikroporösen Aktivkohlen und mikroporösen Kohlenstoffmolekularsiebe können einzeln oder in Form einer Mischung aus mindestens zwei Aktivkohlen, Kohlenstoffmolekularsieben oder Aktivkohlen und Kohlenstoffmolekularsieben mit unterschiedlichen Spezifikationen verwendet werden. Je nach den gewünschten Eigenschaften der herzustellenden PU-Formkörper kann es sich als zweckmäßig erweisen, Mischungen aus Aktivkohlen und/oder Kohlenstoffmolekularsieben zu verwenden, die sich beispielsweise durch das Porenvolumen, den Porendurchmesser und/oder verschieden große Wassergehalte unterscheiden. Durch diese Maßnahme kann die Treibreaktion und die Verdichtung in vorteilhafter Weise gezielt gesteuert und in einfacher Weise an die gegebenen Verfahrensvorrichtungen angepaßt werden oder es können mechanischen Eigenschaften des Endproduktes insgesamt oder in bestimmten Bereichen eines Formkörpers modifiziert werden. Verwendbar sind ferner Kombinationen aus mikroporösen Aktivkohlen und/oder mikroporösen Kohlenstoffmolekularsieben des Isothermentyps I mit mikroporösen Aktivkohlen und/oder Kohlenstoffmolekularsieben des Isothermentyps IV. Mit Mischungen dieser Art können vorteilhaft Formkörper mit einem zelligen Kern und kompakter Randzone hergestellt werden, die eine äußerst niedrige Gesamtdichte besitzen.

Zur Herstellung der Fluorchlorkohlenwasserstoff freien, Urethangruppen enthaltenden Formkörper mit einem zelligen Kern und einer verdichteten Randzone werden die erfindungsgemäß geeigneten mikroporösen Aktivkohlen und/oder mikroporösen Kohlenstoffmolekularsiebe zweckmäßigerweise in einer Menge von 0,5 bis 50 Gew.-%, vorzugsweise 1 bis 20 Gew.-% und insbesondere 2 bis 8 Gew.-%, bezogen auf das Gewicht der Aufbaukomponente(n) (b) oder (b) und (c), verwendet.

Die mikroporösen Aktivkohlen und/oder mikroporösen Kohlenstoffmolekularsiebe können in den handelsüblichen Korngrößen eingesetzt werden. Zur Erzielung einer verbesserten Lagerstabilität und leichteren Handhabung der mikroporösen Aktivkohlen und/oder mikroporösen Kohlenstoffmolekularsiebe enthaltenden Systemkomponente werden zweckmäßigerweise mikroporöse Aktivkohlen und/oder mikroporösen Kohlenstoffmolekularsiebe mit einer Korngröße von 0,5 bis 200 µm, vorzugsweise von 3 bis 40 µm und insbesondere von 5 bis 10 µm verwendet. Zur Verbesserung der Verarbeitbarkeit und zusätzlichen Verlängerung der Lagerstabilität der Systemkomponente hat es sich ferner als vorteilhaft erwiesen, mit Hilfe einer geeigneten Mischvorrichtung, z.B. eines Dreiwalzenstuhls, ein Konzentrat herzustellen, das besteht aus mindestens einer mikroporösen Aktivkohle und/oder eines Kohlenstoffmolekularsiebs und mindestens einer höhermolekularen Verbindung mit mindestens zwei reaktiven Wasserstoffatomen und hierbei den exakten Wassergehalt der Aktivkohle und/oder des Kohlenstoffmolekularsiebs auf den gewünschten Wert vor der Herstellung des Konzentrats einzustellen. Vorzüglich bewährt haben sich Konzentrate, die bestehen aus mindestens einer mikroporösen Aktivkohle oder mindestens einem mikroporösen Kohlenstoffmolekularsieb oder Mischungen davon und mindestens einem mit Ethylendiamin gestarteten Polyoxypropylen-polyol mit einer Hydroxylzahl von 35 bis 100. Das Konzentrat kann auf einfache Weise mit den anderen Aufbaukomponenten gemischt oder direkt der Reaktionsmischung einverleibt werden.

Zur Herstellung von maßgeschneiderten PU-Formulierungen für bestimmte Anwendungen, wie z.B. für KFZ-Lenkräder mit niedrigem Raumgewicht oder für Schuhsohlen, kann es sich als vorteilhaft erweisen ein oder mehrere der mikroporösen Aktivkohlen und/oder mikroporösen Kohlenstoffmolekularsiebe in Verbindung mit kristallinen, mikroporösen Molekularsieben und/oder amorphen, mikroporösen Kieselgelen zu verwenden.

Hierfür bewährt haben sich insbesonders kristalline, mikroporöse Molekularsiebe mit einem Durchmesser der Hohlräume von kleiner als 1,3 nm aus Metalloxiden oder Metallphosphaten, die zweckmäßigerweise ausgewählt sind aus der Gruppe der Aluminium-, Bor-, Eisen-, Chrom-, Vanadium-, Beryllium-, Antimon-, Arsen-, Gallium-, Silicium-, Germanium-, Titan-, Zirkon- und Hafniumoxide oder -phosphate, so daß derartige Molekularsiebe vorzugsweise eingesetzt werden. Hierfür geeignete Molekularsiebe können ferner Mischoxide sein, die im wesentlichen bestehen aus Aluminium-Siliciumoxid, Bor-Siliciumoxid, Eisen(III)-Siliciumoxid, Gallium-Siliciumoxid, Chrom(III)-Siliciumoxid, Beryllium-Siliciumoxid, Vanadium-Siliciumoxid, Antimon(V)-Siliciumoxid, Arsen(III)-Siliciumoxid, Titan(IV)-Siliciumoxid, Aluminium-Germaniumoxid, Bor-Germaniumoxid, Aluminium-Zirkonoxid und Aluminium-Hafniumoxid oder ausschließlich aus Siliciumdioxid (Silicalite). Als Metalloxide eignen sich ferner Zeolithe mit einem Durchmesser der Hohlräume von 0,74 bis 0,41 nm, die vorzugsweise ein SiO₂/Al₂O₃-Verhältnis gleich oder größer als 6 aufweisen. Die Zeolithe können beispielsweise eine Pentasil-, Faujasit-, Mordenit-, Erionit-, Chabasit-, Zeolith-A- oder Offretitstruktur aufweisen. Als kristalline mikroporöse Molekularsiebe werden vorzugsweise Mordenit in der H-Form, Na-Form oder Ammoniumform, Offretit in der H-Form, K-Form, Na-Form oder Ammoniumform, Zeolith ZSM-5 in der H-Form, Na-Form oder Ammonium-Form, Zeolith ZSM-11, Zeolith ZSM-12, Beta-Zeolith, Clinoptilolith, Ferrierit, ultrastabiler Y-Zeolith, ultrastabiler Mordenit oder Silicalite oder insbesondere Mordenit in der H- oder Na-Form oder Silicalite oder Mischungen dieser Molekularsiebe in Kombination mit den mikroporösen Aktivkohlen und/oder Kohlenstoffmolekularsieben verwendet.

Zur Herstellung von maßgeschneiderten PU-Formulierungen für bestimmte andere Anwendungen, wie z.B. für KFZ-Kotflügel oder Bierfaßummantelungen, können die mikroporösen Aktivkohlen und/oder mikroporösen Kohlenstoffmolekularsiebe in analoger Weise mit amorphen, mikroporösen Kieselgelen kombiniert werden. Ferner können als Zusatzstoff (f), wie bereits ausgeführt wurde, auch Mischungen aus mikroporöser Aktivkohle, mikroporösen Kohlenstoffmolekularsieben oder Mischungen davon und mikroporösen kristallinen Molekularsieben, insbesondere Zeolithen, oder amorphen mikroporösen Kieselgelen oder Mischungen aus mikroporösen, kristallinen Molekularsieben und amorphen Kieselgelen verwendet werden.

Als amorphe, mikroporöse Kieselgele haben sich vorzüglich bewährt und finden daher vorzugsweise solche Verwendung, die einen mittleren Porendurchmesser besitzen, der zu mehr als 40 % im Bereich von 0,3 bis 10 nm liegt, ein Porenvolumen im Bereich von 0,15 bis 1,8 ml/g aufweisen und eine BET-Oberfläche im Bereich von 200 bis 900 m²/g haben. Die amorphen, mikroporöse Kieselgele besitzen vorteilhafterweise eine chemische Zusammensetzung, die mindestens 80 Gew.-%, bezogen auf das Gesamtgewicht, Siliciumdioxid enthält. Neben Siliciumdioxid kann die chemische Zusammensetzung der amorphen, mikroporösen Kieselgele zusätzlich Oxide, z.B. Oxide des Aluminiums, Titans, Zirkons, Magnesiums, Niobs, Eisens oder Zinks oder mindestens zwei dieser Metalloxide enthalten.

Sofern derartige Mischungen aus mikroporöser Aktivkohle und/oder Kohlenstoffmolekularsieben und kristallinen, mikroporösen Molekularsieben und/oder amorphen, mikroporösen Kieselgelen Verwendung finden, enthalten diese zweckmäßigerweise 1 bis 40 Gew.-%, vorzugsweise 3 bis 12 Gew.-% mindestens eines dieser Molekularsiebe mit einem Durchmesser der Hohlräume von kleiner als 1,3 nm aus Metalloxiden oder Metallphosphaten, und/oder mindestens eines dieser amorphen, mikroporösen Kieselgele, bezogen auf das Gewicht der mikroporösen Aktivkohle und/oder mikroporösen Kohlenstoffmolekularsiebe.

g) Zusätzlich zu den erfindungswesentlichen mikroporösen Aktivkohlen und/oder mikroporösen Kohlenstoffmolekularsieben oder Mischungen aus mikroporösen Aktivkohlen und/oder Kohlenstoffmolekularsieben und amorphen, mikroporösen Kieselgelen und/oder kristallinen, mikroporösen Molekularsieben können zur Herstellung der Urethangruppen oder Urethan- und Harnstoffgruppen enthaltenden, vorzugsweise weichelastischen Formkörper mit einem zelligen Kern, einer verdichteten Randzone und einer im wesentlichen porenfreien, glatten Oberfläche gegebenenfalls auch noch andere Zusatzstoffe und gegebenenfalls Hilfsmittel (g) mitverwendet werden. Als andere Zusatzstoffe (f) und Hilfsmittel (g) genannt seien beispielsweise oberflächenaktive Substanzen, Schaumstabilisatoren, Zellregler, Gleitmittel, Füllstoffe, Farbstoffe, Pigmente, Flammschutzmittel, Hydrolyseschutzmittel, fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl und Zellregler, wie Paraffine, Fettalkohole und Dimethylpolysiloxane. Zur Verbesserung der Emulgierwirkung, der Zellstruktur und/oder Stabilisierung des Schaumes eignen sich ferner oligomere Polyacrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Komponente (b), angewandt.

Als Gleitmittel hat sich der Zusatz eines Ricinolsäurepolyesters mit einem Molekulargewicht von 1500 bis 3500, vorzugsweise von 2000 bis 3000 besonders bewährt, der zweckmäßigerweise in einer Menge von 0,5 bis 10 Gew.-%, vorzugsweise 5 bis 8 Gew.-%, bezogen auf das Gewicht der Komponente (b) oder der Komponenten (b) und (c) eingesetzt wird.

Als Füllstoffe, insbesondere verstärkend wirkende Füllstoffe, sind die an sich bekannten, üblichen organischen und anorganischen Füllstoffe und Verstärkungsmittel zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum, Wollastonit, Glimmer sowie synthetische Silikate, z.B. Magnesiumaluminiumsilikat (Transpafill®); Metalloxide, wie Kaolin, Aluminiumoxide, Aluminiumsilikat, Titanoxide und Eisenoxide, Metallsalze wie Kreide, Schwerspat und anorganische Pigmente, wie Cadmiumsulfid, Zinksulfid sowie Glaspartikel. Als organische Füllstoffe kommen beispielsweise in Betracht: Ruß, Melamin, Kollophonium, Cyclopentadienylharze und Pfropfpolymerisate.

Die anorganischen und organischen Füllstoffe können einzeln oder als Gemische verwendet werden und werden der Reaktionsmischung vorteilhafterweise in Mengen von 0,5 bis 50 Gew.%, vorzugsweise 1 bis 40 Gew.-%, bezogen auf das Gewicht der Komponenten (a) bis (c), einverleibt.

Geeignete Flammschutzmittel sind beispielsweise Trikresylphosphat, Tris-(2-chlorethyl)phosphat, Tris-(2-chlorpropyl)phosphat, Tris(1,3-dichlorpropyl)phosphat, Tris-(2,3-dibrompropyl)phosphat und Tetrakis-(2-chlorethyl)-ethylendiphosphat.

Außer den bereits genannten halogensubstituierten Phosphaten können auch anorganische Flammschutzmittel, wie roter Phosphor, Blähgraphit, Aluminiumoxidhydrat, Antimontrioxid, Arsenoxid, Ammoniumsulfat, Ammoniumpolyphosphat und Calciumsulfat oder Cyanursäurederivate, wie z.B. Melamin oder Mischungen aus mindestens zwei Flammschutzmitteln, wie z.B. Blähgraphit und Ammoniumpolyphosphat, Ammoniumpolyphosphaten und Melamin sowie gegebenenfalls Blähgraphit und/oder Stärke oder Harnstoff zum Flammfestmachen der erfindungsgemäß hergestellten Formkörper verwendet werden. Im allgemeinen hat es sich als zweckmäßig erwiesen, 2 bis 50 Gew.-Teile, vorzugsweise 5 bis 25 Gew.-Teile der genannten Flammschutzmittel oder -mischungen für jeweils 100 Gew.- Teile der Komponenten (a) bis (c) zu verwenden.

Nähere Angaben über die oben genannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Carl-Hanser-Verlag, München, Wien, 1. und 2. Auflage, 1966 und 1983 zu entnehmen.

Zur Herstellung der Formkörper werden die organischen, gegebenenfalls modifizierten Polyisocyanate (a), höhermolekularen Verbindungen mit mindestens zwei reaktiven Wasserstoffatomen (b) und gegebenenfalls niedermolekularen Kettenverlängerungs- und/oder Vernetzungsmittel in solchen Mengen zur Umsetzung gebracht, daß das Äquivalenz-Verhältnis von NCO-Gruppen der Polyisocanate (a) zur Summe der reaktiven Wasserstoffatome der Komponenten (b) und gegebenenfalls (c) 0,85 bis 1,50:1, vorzugsweise 0,95 bis 1,15:1 und insbesondere 0,9 bis 1,1:1 beträgt.

Die erfindungsgemäßen Urethangruppen oder Urethan- und Harnstoffgruppen enthaltenden, harten, halbharten oder vorzugsweise weichelastischen Formkörper können nach dem Prepolymer oder vorzugsweise nach dem one shot-Verfahren mit Hilfe der Niederdruck-Technik oder der Hochdrucktechnik in geschlossenen, zweckmäßigerweise temperierbaren Formwerkzeugen, beispielsweise metallischen Formwerkzeugen, z.B. aus Aluminium, Gußeisen oder Stahl, oder Formwerkzeugen aus faserverstärkten Polyester- oder Epoxidformmassen hergestellt werden. Aufgrund der guten Fließfahigkeit und verbesserten Verarbeitbarkeit der Formulierungen werden die Formkörper jedoch insbesondere mittels der ReaktionspritzgUßtechnik (RIM-Technik) hergestellt. Diese Verfahrensweisen werden beispielsweise beschrieben von Dr. H. Piechota und Dr. H. Röhr in "Integralschaumstoff", Carl-Hanser-Verlag, München, Wien 1975; D.J. Prepelka und J.L. Wharton in Journal of Cellular Plastics, März/April 1975, Seiten 87 bis 98, U. Knipp in Journal of Cellular Plastics, März/April 1973, Seiten 76 bis 84 und im Kunststoff-Handbuch, Band 7, Polyurethane, 2. Auflage, 1983, Seiten 333 ff.

Als besonders vorteilhaft hat es sich erwiesen, nach dem Zweikomponenten-Verfahren zu arbeiten und die Aufbaukomponenten (b), (d), (e), (f) und gegebenenfalls (c) und (g) in der Komponente (A) zu vereinigen und als Komponente (B) die organischen Polyisocyanate, modifizierten Polyisocyanate (a) oder Mischungen aus den genannten Polyisocyanaten und gegebenenfalls Treibmittel (d) zu verwenden.

Die Ausgangskomponenten werden bei einer Temperatur von 15 bis 80°C, vorzugsweise von 25 bis 55°C gemischt und gegebenenfalls unter erhöhtem Druck in das geschlossene Formwerkzeug eingebracht. Die Vermischung kann mechanisch mittels eines Rührers oder einer Rührschnecke oder unter hohem Druck im sogenannten Gegenstrominjektionsverfahren durchgeführt werden. Die Formwerkzeugtemperatur beträgt zweckmäßigerweise 20 bis 120°C, vorzugsweise 30 bis 80°C und insbesondere 45 bis 60°C. Die Verdichtungsgrade liegen im Bereich von 1,1 bis 8,3, vorzugsweise von 2 bis 7 und insbesondere von 2,4 bis 4,5.

Die Menge des in das Formwerkzeug eingebrachten Reaktionsgemisches wird vorteilhafterweise so bemessen, daß die erhaltenen Formkörper eine Gesamtdichte von 0,06 bis 1,2 g/cm³ aufweisen, wobei die mikrozellularen, elastischen Formkörper vorzugsweise eine Gesamtdichte von 0,7 bis 1,2 g/cm³, insbesondere von 0,8 bis 1,0 g/cm³, die harten und halbharten Formkörper vorzugsweise eine Gesamtdichte von 0,1 bis 0,9 g/cm³, insbesondere von 0,35 bis 0,8 g/cm³ und die weichelastischen Formkörper vorzugsweise eine Gesamtdichte von 0,2 bis 0,7 g/cm³, vorzugsweise von 0,4 bis 0,7 g/cm³ besitzen.

Die nach dem erfindungsgemäßen Verfahren hergestellten mikrozellularen, elastischen Formkörper finden beispielsweise Verwendung in der Automobilindustrie z.B. als Stoßstangenabdeckungen, Stoßdämpfer, Raumschutzleisten, Regenrinnen, Kotflügel und für andere Karosserieteile. Sie eignen sich ferner als technische Gehäuseteile, z.B. für Radio- oder Fernsehgeräte, Kopiergeräte oder Computer, als Büromöbel und als Laufrollen. Die weichelastischen Formkörper finden beispielsweise Verwendung als Armlehnen, Nackenstützen, Kopfstützen und Sicherheitsverkleidungen im Kraftfahrzeuginnenraum, als Sportartikel sowie als Fahrrad- oder Motorradsattel. Sie eignen sich ferner als Innenschuh für Skistiefel oder als Schuhsohlen. Sie eignen sich insbesondere als Lenkräder für Verkehrsmittel. Die halbharten Formkörper eignen sich als Armaturenbretter und Seitenverkleidungen in Verkehrsmitteln, als Skikerne und insbesondere für die Ummantelung von metallischen Behältern, vorzugsweise von Metallfässern für Getränke, beispielsweise alkoholische oder alkoholfreie Getränke, wie z.B. Bier oder Fruchtsäfte. Die harten Formkörper finden Verwendung in der Möbelindustrie, Bauindustrie und in Skipistenraupen und Schneeräumfahrzeugen. Das erfindungsgemäße Verfahren eignet sich insbesondere zum Ummanteln von metallischen Behältern, vorzugsweise von Metallfasern für Getränke und zur Herstellung von Formkörpern für den Außen- und Innenbereich von Verkehrsmitteln, insbesondere von Lenkrädern, Nackenstützen, Armlehnen und Kotflügeln sowie zur Herstellung technischer Gehäuseteile, insbesondere von Computergehäusen.

### Beispiel 1

### A-Komponente: Mischung, bestehend aus

26,86 Gew.-Teilen eines mit Glycerin gestarteten Polyoxypropylen (86,5 Gew.-%)-polyoxyethylen (13,5 Gew.-%)-polyols mit der OH-Zahl 35,
41,48 Gew.-Teilen eines mit 1,3-Propylenglykol gestarteten Polyoxypropylen (81,5 Gew.-%)-polyoxyethylen (18,5 Gew.-%)-polyols mit der OH-Zahl 29,
14,0 Gew.-Teilen eines mit Trimethylolpropan gestarteten Polyoxypropylen (80 Gew.-%)-polyoxyethylen (20 Gew.-%)-polyols mit der OH-Zahl 27,
11,0 Gew.-Teilen Butandiol (1,4),
2,64 Gew.-Teilen einer Pigmentpaste (Farbpaste A100 der Fa. ISL Chemie, Köln),
1,0 Gew.-Teilen einer 33 gew.%igen Lösung von Triethylendiamin in Ethylenglykol,
0,02 Gew.-Teilen eines Zinn-IV-mercaptokatalysators (Fomrez® UL 32 der Fa. Witco, USA) und
3,0 Gew.-Teilen einer mikroporösen Aktivkohle mit folgender Spezifikation:

| | |
|---|---|
| Gas-Sorption BET-Oberfläche: | 1330 m²/g |
| (Stickstoffsorption, 77 K) | |
| BET-Analyse C-Wert: | -147 |
| Porenvolumen (p/p° = 0.98): | 0,710 ml/g |
| mittlerer Porendurchmesser: | 1,5 nm |
| Isothermen-Typ: | Typ-I |
| (BDDT-Klassifizierung) | |
| Wasser-Titration (Mottlau-Fisher): | 0,7-0,72 ml/g |
| Schüttdichte: | 0,45 kg/l |
| Wassergehalt (aus Trocknungsverlust bei 160°C): | 14,5 Gew.-% |

(BET: S. Brunauer, P.H. Emmett, E. Teller BDDT: S. Brunauer, L. Deming, W. Deming, E. Teller, J. Amer. Chem. Soc. Vol. 62, Seiten 1723 bis 1732 (1940))

### B-Komponente: Mischung, bestehend aus

50 Gew.-Teilen eines Urethangruppen enthaltenden Quasiprepolymeren mit einem NCO-Gehalt von 23 Gew.-%, hergestellt durch Umsetzung von 4,4'-Diphenylmethan-diisocyanat mit einer Mischung aus Dipropylenglykol und einem Polyoxypropylen-glykol mit einer Hydroxylzahl von 250 und
50 Gew.-Teilen einer Carbodiimidgruppen enthaltenden Polyisocyanatmischung mit einem NCO-Gehalt von 29,5 Gew.-%, hergestellt durch partielle Carbodiimidisierung von 4,4'-Diphenylmethan-diisocyanat.

100 Gew.-Teile der A-Komponente und 52 Gew.-Teile der B-Komponente wurden bei 25°C auf einer Niederdruckdosieranlage vom Typ F 20 der Firma Elastogran Polyurethane GmbH, Geschäftsbereich Maschinenbau, 8021 Straßiach, gemischt und in ein auf 50°C temperiertes metallisches Formwerkzeug mit den inneren Abmessungen 200x200x40 mm in einer solchen Menge eingebracht, daß sich nach dem Verschiießen des Formwerkzeugs ein Verdichtungsgrad von 2,14 einstellte.

Der Formkörper wurde nach 3,5 Minuten entformt. Man erhielt eine Polyurethanplatte mit einem zelligen Kern, einer verdichteten Randzone und einer porenfreien Oberfläche, die eine Härte Shore A von 83 besaß.

An dem Polyurethan-Formkörper wurden folgende mechanische Eigenschaften gemessen:
Gesamtdichte (nach DIN 53 420) von 750 g/l,
Zugfestigkeit (nach DIN 53 455) von 13,5 N/mm² und
Weiterreißfestigkeit (nach DIN 53 515) von 10,3 N/mm

Wurde die Reaktionsmischung in einem offenen Formwerkzeug aufschäumen gelassen, so erhielt man einen Schaumkörper mit einer Gesamtdichte von 350 g/l. Hierbei gemessen wurde eine Startzeit von 19 Sekunden und eine Steigzeit von 40 Sekunden.

### Beispiel 2

### A-Komponente: Mischung, bestehend aus

- 39,02: Gew.-Teilen eines mit Glycerin gestarteten Polyoxypropylen (86,5 Gew.-%)-polyoxyethylen (13,5 Gew.-%)-polyols mit einer OH-Zahl von 35,
- 21,93: Gew.-Teilen eines Pfropf-polyether-polyols mit einer Hydroxylzahl von 28, hergestellt aus einem mit Glycerin gestarteten Polyoxypropylen-polyoxyethylen-polyol als Pfropfgrundlage und einer Mischung aus Styrol und Acrylnitril im Gewichtsverhältnis 12:8 als Pfropfauflage (Polyurax® U 26-03 der Firma BP, Deutschland)
- 0,1: Gew.-Teilen Wasser,
- 5,0: Gew.-Teilen Tributylamin,
- 13,95: Gew.-Teilen eines Trimethylolpropan-Ethylenoxid-Addukts mit einer OH-Zahl von 904 und einem Kaliumionengehalt von 513 ppm, und
- 20: Gew.-Teilen eines Konzentrats, welches bestand, bezogen auf das Gesamtgewicht, aus 25 Gew.-% der mikroporösen Aktivkohle aus Beispiel 1, jedoch mit einem Wassergehalt von 11,7 Gew.-% und 75 Gew.-% eines mit Glycerin gestarteten Polyoxypropylen (86,5 Gew.-%)-polyoxyethylen (13,5 Gew.-%)-polyols mit einer OH-Zahl von 35

### B-Komponente:

### Mischung, bestehend aus

50 Gew.-Teilen eines Urethangruppen enthaltenden Quasiprepolymeren mit einem NCO-Gehalt von 23 Gew.-%, hergestellt durch Umsetzung von 4,4'-Diphenylmethan-diisocyanat mit einer Mischung aus Dipropylenglykol und einem Polyoxypropylen-glykol -glykol mit einer Hydroxylzahl von 250 und
50 Gew.-Teilen eines Urethangruppen enthaltenden Quasiprepolymeren mit einem NCO-Gehalt von 28 Gew.-%, hergestellt durch Umsetzung einer Mischung aus 55 Gew.-Teilen 4,4'-Diphenylmethan-diisocyanat und 45 Gew.-Teilen einer Mischung aus Diphenylmethan-diisocyanaten und Polyphenyl-polymethylen-polyisocyanaten mit 9 Gew.-Teilen eines Polyoxypropylen-glykols mit einer Hydroxylzahl von 250.

100 Gew.-Teile der A-Komponente und 48,52 Gew.-Teile der B-Komponente wurden bei 25°C auf einer Niederdruckdosieranlage vom Typ F 20 der Firma Elastogran Polyurethane GmbH, Geschäftsbereich Maschinenbau, 8021 Straßlach, gemischt und in ein auf 50°C temperiertes metallisches Formwerkzeug mit den inneren Abmessungen 200x200x40 mm in einer solchen Menge eingebracht, daß sich nach dem Verschließen des Formwerkzeugs ein Verdichtungsgrad von 3,1 einstellte.

Der Formkörper wurde nach 4 Minuten entformt. Man erhielt eine weichelastische Polyurethanplatte mit einem zelligen Kern, einer verdichteten Randzone und einer porenfreien Oberfläche, die eine Shore A-Härte von 90 besaß.

Wurde die Reaktionsmischung in einem offenen Formwerkzeug aufschäumen gelassen, so erhielt man einen Schaumkörper mit der Gesamtdichte von 158 g/l. Hierbei wurde eine Standzeit von 28 Sekunden und eine Steigzeit von 91 Sekunden gemessen.

### Beispiel 3

### A-Komponente: Mischung, bestehend aus

45,18 Gew.-Teilen eines mit 1,3-Propylenglykol gestarteten Polyoxypropylen (81,5 Gew.-%)-polyoxyethylen (18,5 Gew.-%)-polyols mit einer OH-Zahl von 29,
9,60 Gew.-Teilen eines mit Glycerin gestarteten Polyoxypropylen (86,5 Gew.-%)-polyoxyethylen (13,5 Gew.-%)-polyols mit einer OH-Zahl von 35,
20 Gew.-Teilen einer Polyether-polyoldispersion mit einer OH-Zahl von 35, hergestellt durch Polyaddition von 1,2-Propylenoxid (86 Gew.-%) an Glycerin als Startermolekül und anschließender Polyaddition von Ethylenoxid (14 Gew.%) an das erhaltene Glycerin-polyoxypropylenaddukt und danach Dispergierung eines synthetisch hergestellten Magnesiumaluminiumsilikats (Transpafill® der Firma Degussa) als Füllstoff im Gewichtsverhältnis Polyoxypropylen-polyoxyethylen-polyol zu Füllstoff von 85:15 bei 23°C mit Hilfe eines Dissolvens mit 1000 Upm in 5 Minuten,
10 Gew.-Teilen Butandiol-1,4,
1,4 Gew.-Teilen einer 25 gew.%igen Lösung von Triethylendiamin in Butandiol-1,4,
3,0 Gew.-Teilen einer Pigmentpaste (Schwarzpaste ISL AA308 der Fa. ISL Chemie, Köln),
0,02 Gew.-Teilen eines Zinn-IV-mercaptokatalysators (Fomrez® UL32 der Firma Witco, USA) und
10,0 Gew.-Teilen eines 25 gew.%igen Batches aus 75 Gew.-Teilen eines mit Glycerin gestarteten Polyoxypropylen(86,5 Gew.-%)-polyoxymethylen(13,5 Gew.-%)polyols mit einer OH-Zahl von 35 und 25 Gew.-Teilen einer mikroporösen Aktivkohle mit folgender Spezifikation:

| | |
|---|---|
| Gas-Sorption BET-Oberfläche: | 1330 m²/g |
| (Stickstoffsorption, 77 K) | |
| BET-Analyse C-Wert: | -147 |
| Porenvolumen (p/p° = 0.98): | 0,710 ml/g |
| mittlerer Porendurchmesser: | 1,5 nm |
| Isothermen-Typ: | Typ-I |
| (BDDT-Klassifizierung) | |
| Wasser-Titration (Mottlau-Fisher): | 0,7-0,72 ml/g |
| Schüttdichte: | 0,45 kg/l |
| Wassergehalt (aus Trocknungsverlust bei 160°C): | 9,14 Gew.-% |

(BET: S. Brunauer, P.H. Emmett, E. Teller BDDT: S. Brunauer, L. Deming, W. Deming, E. Teller, J. Amer. Chem. Soc. Vol. 62, Seiten 1723 bis 1732 (1940))

### B-Komponente: Mischung, bestehend aus

50 Gew.-Teilen eines Urethangruppen enthaltenden Quasiprepolymeren mit einem NCO-Gehalt von 23 Gew.-%, hergestellt durch Umsetzung von 4,4'-Diphenylmethan-diisocyanat mit einer Mischung aus Dipropylenglykol und einem Polyoxypropylen-glykol mit einer Hydroxylzahl von 250 und
50 Gew.-Teilen einer Carbodiimidgruppen enthaltenden Polyisocyanatmischung mit einem NCO-Gehalt von 29,5 Gew.-%, hergestellt durch partielle Carbodiimidisierung von 4,4'-Diphenylmethan-diisocyanat.

100 Gew.-Teile der A-Komponente und 47 Gew.-Teile der B-Komponente wurden bei 35°C nach dem Reaktionsspritzgußverfahren auf einer Kolbendosieranlage vom Typ Puromat® 80 der Firma Elastogran Polyurethane GmbH, Geschäftsbereich Maschinenbau, 8021 Straßlach, gemischt und in ein auf 45°C temperiertes metallisches Formwerkzeug mit der Raumform eines Automobilkotflügels in einer solchen Menge eingebracht, daß sich beim Aufschäumen ein Verdichtungsgrad von 2 einstellte.

Der Formkörper wurde nach 3 Minuten entformt. Er besaß einen zelligen Kern, eine verdichtete Randzone und eine kompakte, porenfreie Oberfläche mit einer Shore-A-Härte von 86.

Beim Verschäumen der Reaktionsmischung in einem offenen Formwerkzeug erhielt man einen Schaumstoffkörper mit einer Gesamtdichte von 350 g/l. Bei der Schaumreaktion wurde eine Startzeit von 9 Sekunden und eine Steigzeit von 26 Sekunden gemessen.

## Patentansprüche

1. Verfahren zur Herstellung von Fluorchlorkohlenwasserstoff freien, Urethangruppen oder Urethan- und Harnstoffgruppen enthaltenden Formkörpern mit einem zelligen Kern und einer verdichteten Randzone durch Umsetzung von
a) organischen und/oder modifizierten organischen Polyisocyanaten mit
b) mindestens einer höhermolekularen Verbindung mit mindestens zwei reaktiven Wasserstoffatomen und gegebenenfalls
c) niedermolekularen Kettenverlängerungs- und/oder Vernetzungsmitteln
in Gegenwart von
d) Treibmitteln,
e) Katalysatoren,
f) Zusatzstoffen und gegebenenfalls
g) Hilfsmitteln
in einem geschlossenen Formwerkzeug unter Verdichtung, dadurch gekennzeichnet, daß man als Zusatzstoff (f) mikroporöse Aktivkohle, mikroporöse Kohlenstoffmolekularsiebe oder Mischungen aus derartigen Aktivkohlen und Kohlenstoffmolekularsieben verwendet, wobei die mikroporösen Aktivkohlen oder mikroporösen Kohlenstoffmolekularsiebe mittlere Porendurchmesser haben, die zu mehr als 40 % im Bereich von 0,3 bis 3 nm liegen.

2. Verfahren nach Anspruch 1, dadurch gekennzeichnet, daß die mikroporösen Aktivkohlen oder mikroporösen Kohlenstoffmolekularsiebe Porenvolumen im Bereich von 0,20 bis 1,4 ml/g besitzen.

3. Verfahren nach Anspruch 1, dadurch gekennzeichnet, daß die mikroporösen Aktivkohlen oder mikroporösen Kohlenstoffmolekularsiebe BET-Oberflächen im Bereich von 500 bis 2500 m²/g besitzen.

4. Verfahren nach Anspruch 1, dadurch gekennzeichnet, daß man die mikroporösen Aktivkohlen oder mikroporösen Kohlenstoffmolekularsiebe oder Mischungen aus Aktivkohlen und Kohlenstoffmolekularsieben in einer Menge von 0,5 bis 50 Gew.-%, bezogen auf das Gewicht der Aufbaukomponenten (b) oder (b) und (c) verwendet.

5. Verfahren nach Anspruch 1, dadurch gekennzeichnet, daß man den Zusatzstoff (f) in Form eines Konzentrats, bestehend aus mindestens einer mikroporösen Aktivkohle oder mindestens einem mikroporösen Kohlenstoffmolekularsieb oder Mischungen davon und mindestens einer höhermolekularen Verbindung mit zwei reaktiven Wasserstoffatomen, verwendet.

6. Verfahren nach Anspruch 1, dadurch gekennzeichnet, daß man den Zusatzstoff (f) in Form eines Konzentrats, bestehend aus mindestens einer mikroporösen Aktivkohle oder mindestens einem mikroporösen Kohlenstoffmolekularsieb oder Mischungen davon und mindestens einem mit Ethylendiamin gestarteten Polyoxypropylen-polyol mit einer Hydroxylzahl von 35 bis 100, verwendet.

7. Verfahren nach Anspruch 1, dadurch gekennzeichnet, daß die mikroporösen Aktivkohlen oder mikroporösen Kohlenstoffmolekularsiebe einen Wassergehalt von 3 bis 20 Gew.-%, bezogen auf das Gesamtgewicht, besitzen.

8. Verfahren nach Anspruch 1, dadurch gekennzeichnet, daß man als Zusatzstoff (f) mikroporöse Aktivkohle, mikroporöse Kohlenstoffmolekularsiebe oder Mischungen davon in Kombination mit mikroporösen, kristallinen Molekularsieben oder amorphen, mikroporösen Kieselgelen oder Mischungen davon verwendet.

9. Verfahren nach Anspruch 1, dadurch gekennzeichnet, daß man als Zusatzstoff (f) eine Mischung aus mikroporöser Aktivkohle oder mikroporösen Kohlenstoffmolekularsieben, amorphen mikroporösen Kieselgelen und Zeolithen verwendet.

10. Verfahren nach Anspruch 1, dadurch gekennzeichnet, daß die mikroporöse Aktivkohle oder mikroporösen Kohlenstoffmolekularsiebe eine Isotherme vom Typ I besitzen.

11. Verfahren nach Anspruch 1, dadurch gekennzeichnet, daß man als Treibmittel (d) Wasser oder physikalisch wirkende Treibmittel mit Ausnahme von Fluorchlorkohlenwasserstoffen oder Mischungen aus Wasser und derartigen physikalisch wirkenden Treibmitteln verwendet.

12. Verfahren nach Anspruch 1, dadurch gekennzeichnet, daß die Fluorchlorkohlenwasserstoff freien, Urethangruppen enthaltenden Formkörper mit Hilfe der RIM-Technik oder Niederdrucktechnik hergestellt werden.

## Claims

1. A process for the production of chlorofluorocarbon-free, urethane- or urethane- and urea-containing moldings having a cellular core and a compacted peripheral zone, by reacting
a) an organic and/or modified organic polyisocyanate with
b) at least one relatively high-molecular-weight compound containing at least two reactive hydrogen atoms, and, if desired,
c) a low-molecular-weight chain extender and/or crosslinking agent,
in the presence of
d) a blowing agent,
e) a catalyst,
f) additives and, if desired,
g) assistants,
in a closed mold with compaction, wherein one of the additives (f) is microporous activated charcoal, microporous carbon molecular sieve or a mixture thereof, the microporous activated charcoal or microporous carbon molecular sieve having a mean pore diameter with a frequency of occurrence of more than 40% in the range from 0.3 to 3 nm.

2. A process as claimed in claim 1, wherein the microporous activated charcoal or microporous carbon molecular sieve has a pore volume in the range from 0.20 to 1.4 ml/g.

3. A process as claimed in claim 1, wherein the microporous activated charcoal or microporous carbon molecular sieve has a BET surface area in the range from 500 to 2500 m²/g.

4. A process as claimed in claim 1, wherein the microporous activated charcoal or microporous carbon molecular sieve or the mixture of activated charcoal and carbon molecular sieve is used in an amount of from 0.5 to 50% by weight, based on the weight of starting components (b) or (b) and (c).

5. A process as claimed in claim 1, wherein the additive (f) is used in the form of a concentrate comprising at least one microporous activated charcoal or at least one microporous carbon molecular sieve or a mixture thereof, and at least one relatively high-molecular-weight compound containing two reactive hydrogen atoms.

6. A process as claimed in claim 1, wherein the additive (f) is used in the form of a concentrate comprising at least one microporous activated charcoal or at least one microporous carbon molecular sieve or a mixture thereof, and at least one ethylenediamine-initiated polyoxypropylene-polyol having a hydroxyl number of from 35 to 100.

7. A process as claimed in claim 1, wherein the microporous activated charcoal or microporous carbon molecular sieve has a water content of from 3 to 20% by weight, based on the total weight.

8. A process as claimed in claim 1, wherein the additive (f) used is microporous activated charcoal, microporous carbon molecular sieve or a mixture thereof in combination with microporous, crystalline molecular sieve or amorphous, microporous silica gel, or a mixture thereof.

9. A process as claimed in claim 1, wherein the additive (f) used is a mixture of microporous activated charcoal or microporous carbon molecular sieve, amorphous, microporous silica gel and zeolite.

10. A process as claimed in claim 1, wherein the microporous activated charcoal or microporous carbon molecular sieve has type I isothermicity.

11. A process as claimed in claim 1, wherein the blowing agent (d) used is water or a physical blowing agent, with the exception of chlorofluorocarbons, or a mixture of water and a physical blowing agent of this type.

12. A process as claimed in claim 1, wherein the chlorofluorocarbon-free, urethane-containing moldings are produced by RIM or the low-pressure process.

## Revendications

1. Procédé pour la fabrication de corps moulés à noyau cellulaire et zone de bordure compacte, contenant des groupes uréthanne ou des groupes uréthanne et urée et exempts d'hydrocarbures fluorés et chlorés, par réaction de
a) polyisocyanates organiques et/ou polyisocyanates organiques modifiés avec
b) au moins un composé à haut poids moléculaire contenant au moins deux atomes d'hydrogène réactifs et, le cas échéant,
c) des agents d'allongement des chaînes et/ou agents réticulants à bas poids moléculaire,
en présence
d) d'agents gonflants,
e) de catalyseurs,
f) d'additifs et, le cas échéant,
g) de produits auxiliaires
dans un outil de moulage fermé, sous compression, caractérisé par le fait que l'on utilise, en tant qu'additifs f), un charbon actif microporeux, un tamis moléculaire de carbone microporeux ou un mélange d'un tel charbon actif et d'un tel tamis moléculaire de carbone, les charbons actifs microporeux et tamis moléculaire de carbone microporeux ayant des diamètres de pores moyens situés pour plus de 40 % dans l'intervalle de 0,3 à 3 nm.

2. Procédé selon la revendication 1, caractérisé par le fait que les charbons actifs microporeux et tamis moléculaire de carbone microporeux ont des volumes de pores dans l'intervalle de 0,20 à 1,4 ml/g.

3. Procédé selon la revendication 1, caractérisé par le fait que les charbons actifs microporeux et tamis moléculaire de carbone microporeux ont des surfaces BET dans l'intervalle de 500 à 2500 m²/g.

4. Procédé selon la revendication 1, caractérisé par le fait que les charbons actifs microporeux ou tamis moléculaire de carbone microporeux ou leurs mélanges sont utilisés en quantité de 0,5 à 50 % du poids des composants de synthèse b) ou b) et c).

5. Procédé selon la revendication 1, caractérisé par le fait que l'additif f) est utilisé à l'état de concentré consistant en au moins un charbon actif microporeux ou au moins un tamis moléculaire de carbone microporeux ou leurs mélanges et au moins un composé à haut poids moléculaire à deux atomes d'hydrogène réactifs.

6. Procédé selon la revendication 1, caractérisé par le fait que l'additif f) est utilisé à l'état de concentré consistant en au moins un charbon actif microporeux ou au moins un tamis moléculaire de carbone microporeux ou leurs mélanges et au moins un polyoxypropylèneglycol condensé sur une mole de départ d'éthylènediamine et ayant un indice d'hydroxyle de 35 à 100.

7. Procédé selon la revendication 1, caractérisé par le fait que les charbons actifs microporeux ou tamis moléculaire de carbone microporeux ont une teneur en humidité de 3 à 20 % de leur poids total.

8. Procédé selon la revendication 1, caractérisé par le fait que l'on utilise, en tant qu'additif f), un charbon actif microporeux, un tamis moléculaire de carbone microporeux ou leur mélange en combinaison avec des tamis moléculaires cristallins microporeux ou des gels de silice microporeux amorphes ou leurs mélanges.

9. Procédé selon la revendication 1, caractérisé par le fait que l'on utilise, en tant qu'additif f), un mélange de charbon actif microporeux ou de tamis moléculaires de carbone microporeux, de gel de silice microporeux amorphe et de zéolithe.

10. Procédé selon la revendication 1, caractérisé par le fait que les charbons actifs microporeux et les tamis moléculaires de carbone microporeux ont une isotherme de type I.

11. Procédé selon la revendication 1, caractérisé par le fait que l'on utilise, en tant qu'agents gonflants d), l'eau ou des agents gonflants physiques à l'exception des hydrocarbures fluorés et chlorés, ou des mélanges d'eau et de ces agents gonflants physiques.

12. Procédé selon la revendication 1, caractérisé par le fait que les corps moulés contenant des groupes uréthanne et exempts d'hydrocarbures fluorés et chlorés sont fabriqués par la technique de moulage réactif par injection ou par la technique à basse pression.
